# EUROPEAN PATENT APPLICATION

(11) **EP 4 745 369 A1**
(43) Date of publication of application: **20.05.2026**
(21) Application number: 25216040.3
(22) Date of filing: 14.11.2025
(51) Int. Cl.: F01D 25/18, F01D 1/24, F02C 7/06

(54) **LUBRICANT SYSTEM FOR A GAS TURBINE ENGINE**

(30) Priority: 15.11.2024 US 202418949285
(71) Applicant: Pratt & Whitney Canada Corp., (01BE5) Longueuil, QC J4G 1A1 (CA)
(72) Inventor: DIOSADY, Laslo T., (01BE5) Longueuil, J4G 1A1 (CA); LABBE, Michel, (01BE5) Longueuil, J4G 1A1 (CA); ST-AMANT, Patrick, (01BE5) Longueuil, J4G 1A1 (CA)
(74) Representative: Dehns

(57) **Abstract**

A lubrication system (78) includes a first rotating shaft (52) and a second rotating shaft (50). The first rotating shaft (52) and the second rotating shaft (50) are separated by a flowpath (58). The flowpath (58) includes a fluid (72). The fluid (72) is directed towards an outer surface (80) of the first rotating shaft (52). The fluid (72) thereafter moves towards the outer surface (84) of the second rotating shaft (50). The second structure includes a recess (86) configured to collect the fluid (72). The outer surface (80) may include a protrusion (90). The protrusion (90) is configured to direct fluid (72) from the outer surface (80) to the recess (86).

## Description

### BACKGROUND OF THE INVENTION

### 1. Technical Field

The present disclosure relates to lubrication systems within gas turbine engines in general and to structures configured to direct lubricant to other structures or components in particular, such as gearboxes and bearings.

### 2. Background Information

Gas turbine engines, including those configured to power aircraft, include lubricant systems providing fluid to components in order to reduce friction between various components. Lubricant not only operates to reduce friction, it may offer cooling to components generating heat energy through, e.g., friction. Lubricant is directed to components through flow paths. Due to the complexity of components within engines, numerous flow paths are provided to route lubricant to moving components such as gearboxes and bearings.

Having additional cooling routes to get to components and structures that are remote from a lubricant source is costly as it may require modifications to numerous engine components and may impact the integrity or functionality of the surrounding components. This can prove further challenging to successfully implement improved lubrication for such remote components. As such, it is desirous to have a flowpath suitable for multiple components (e.g., within an aircraft gas turbine engine, etc.) without significant reconfiguration of adjacent components.

### SUMMARY

According to an aspect of the present disclosure, a lubrication system is provided. The lubrication system is provided for a turbine engine, such as an aircraft engine. The lubrication system includes a first rotating structure (e.g., a shaft), a second rotating structure (e.g., a shaft), a flowpath between the first rotating shaft and the second rotating shaft, and a lubricant directed into the flowpath. The first rotating shaft includes a first outer surface. The first rotating shaft is configured to rotate about a central axis. The second rotating shaft includes a second inner surface. The second rotating shaft includes a second outer surface. The second inner surface is generally opposite to the second outer surface. The second rotating shaft is configured to rotate around the central axis. The second rotating shaft is disposed radially outward of the first rotating shaft. The second rotating shaft includes a recess. The recess is disposed on the second inner surface. The lubricant is directed into the flowpath such that the lubricant is in contact with the first rotating structure. The lubricant is directed into the flowpath such that the lubricant is in contact with the first outer surface. The lubricant separates from the first outer surface through the flowpath. The lubricant travels through the flowpath and into the recess.

In any of the aspects or examples described above or herein, the first outer surface includes a protrusion. The protrusion is spaced from the second inner surface by the flowpath. The protrusion is positioned radially along the first outer surface between a first end of the recess and a second end of the recess. The protrusion may be positioned aft of the first end of the recess. The protrusion may be positioned forward of the second end of the recess. The protrusion may be positioned downstream of the first end of the recess. The protrusion may be positioned upstream of the second end of the recess.

In any of the aspects or examples described above or herein, the recess may include an outlet. The outlet is configured within the recess between the first end and the second end. The outlet may be proximal the second end of the recess. The outlet may be distal to the first end of the recess.

In any of the aspects or examples described above or herein, the protrusion may include a plateau. The plateau extends along the first outer surface. The plateau is configured to be radially proximal to the recess on the second inner surface. The plateau is configured to be radially proximal to the outlet on the second inner surface.

In any of the aspects or examples described above or herein, the first outer surface includes a depression. The depression is disposed adjacent the protrusion. The depression may be disposed forward of the protrusion. The depression may be positioned upstream of the protrusion.

In any of the aspects or examples described above or herein, the first outer surface upstream of the protrusion is tapered radially inwardly along the central axis towards the protrusion.

In any of the aspects or examples described above or herein, the lubrication system may include a nozzle. The nozzle may be disposed forward of the protrusion. The nozzle may be disposed upstream of the protrusion. The nozzle is configured to direct lubricant onto the first rotating structure. The nozzle is configured to direct lubricant onto the first outer surface of the first rotating structure. In some embodiments, more than one nozzle are provided.

In any of the aspects or examples described above or herein, the first rotating structure (e.g., a shaft) rotates in a first rotational direction. The second rotating structure (e.g., a shaft) rotates in a second rotational direction. The first rotational direction may be opposite to the second rotational direction. The first rotational direction may be the same as the second rotational direction.

In any of the aspects or examples described above or herein, the first rotational structure (e.g., a shaft) may co-rotate with the second rotational structure (e.g., a shaft). The first rotational structure (e.g., a shaft), may counter-rotate with respect to the second rotational structure (e.g., a shaft).

In any of the aspects or examples described above or herein, the first rotating structure (e.g., a shaft) rotates at a first angular velocity. The second rotating structure (e.g., a shaft) rotates at a second angular velocity. The first angular velocity may be different than the second angular velocity. The first angular velocity may be less than the second angular velocity.

In any of the aspects or examples described above or herein, the first rotating structure (e.g., a shaft) is a low speed shaft.

In any of the aspects or examples described above or herein, the second rotating structure (e.g., a shaft) is a high speed shaft.

According to another aspect of the present disclosure, which the Applicant expressly reserves the right to claim independently, a lubrication system is provided. The lubrication system is provided for a turbine engine, such as an aircraft engine. The lubrication system includes a first rotating structure (e.g., a shaft), a second rotating structure (e.g., a shaft), a flowpath between the first rotating shaft and the second rotating shaft, and a lubricant directed into the flowpath. The first rotating shaft includes a first outer surface. The first rotating shaft is configured to rotate about a central axis. The second rotating shaft includes a second inner surface. The second rotating shaft includes a second outer surface. The second inner surface is generally opposite to the second outer surface. The second rotating shaft is configured to rotate around the central axis. The second rotating shaft is disposed radially outward of the first rotating shaft. The second rotating shaft includes a recess. The recess is disposed on the second inner surface. The lubricant is directed into the flowpath such that the lubricant is in contact with the first rotating structure. The lubricant is directed into the flowpath such that the lubricant is in contact with the first outer surface. The lubricant separates from the first outer surface through the flowpath. The lubricant travels through the flowpath and into the recess. The first outer surface includes a protrusion. The protrusion extends radially outward from the first rotating structure (e.g., a shaft). The protrusion extends radially outward from the first outer surface. The protrusion is spaced from the second inner surface by the flowpath. The protrusion is positioned radially along the first outer surface between a first end of the recess and a second end of the recess. The protrusion may be positioned aft of the first end of the recess. The protrusion may be positioned forward of the second end of the recess. The protrusion may be positioned downstream of the first end of the recess. The protrusion may be positioned upstream of the second end of the recess.

In any of the aspects or examples described above or herein, the recess may include an outlet. The outlet is configured within the recess between the first end and the second end. The outlet may be proximal the second end of the recess. The outlet may be distal to the first end of the recess.

In any of the aspects or examples described above or herein, the protrusion may include a plateau. The plateau extends along the first outer surface. The plateau is configured to be radially proximal to the recess on the second inner surface. The plateau is configured to be radially proximal to the outlet on the second inner surface.

In any of the aspects or examples described above or herein, the first outer surface includes a depression. The depression is disposed adjacent the protrusion. The depression may be disposed forward of the protrusion. The depression may be positioned upstream of the protrusion.

In any of the aspects or examples described above or herein, the first outer surface upstream of the protrusion is tapered radially inwardly along the central axis towards the protrusion.

In any of the aspects or examples described above or herein, the lubrication system may include a nozzle. The nozzle may be disposed forward of the protrusion. The nozzle may be disposed upstream of the protrusion. The nozzle is configured to direct lubricant onto the first rotating structure. The nozzle is configured to direct lubricant onto the first outer surface of the first rotating structure. In some examples, more than one nozzle is provided.

In any of the aspects or examples described above or herein, the first rotating structure (e.g., a shaft) rotates in a first rotational direction. The second rotating structure (e.g., a shaft) rotates in a second rotational direction. The first rotational direction may be opposite to the second rotational direction. The first rotational direction may be the same as the second rotational direction.

In any of the aspects or examples described above or herein, the first rotational structure (e.g., a shaft) may co-rotate with the second rotational structure (e.g., a shaft). The first rotational structure (e.g., a shaft), may counter-rotate with respect to the second rotational structure (e.g., a shaft).

In any of the aspects or examples described above or herein, the first rotating structure (e.g., a shaft) rotates at a first angular velocity. The second rotating structure (e.g., a shaft) rotates at a second angular velocity. The first angular velocity may be different than the second angular velocity. The first angular velocity may be less than the second angular velocity.

In any of the aspects or examples described above or herein, the first rotating structure (e.g., a shaft) is a low speed shaft.

In any of the aspects or examples described above or herein, the second rotating structure (e.g., a shaft) is a high speed shaft.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic view of a gas turbine engine.
FIG. 2 is a diagrammatic illustration of a portion of a gas turbine engine.
FIG. 3 is a detail sectional view of a portion of a gas turbine engine shown in FIG. 2.
FIG. 4 is a detail sectional view of a portion of a gas turbine engine shown in FIG. 2.
FIG. 5 is a diagrammatic sectional view of a portion of a gas turbine engine.
FIG. 6 is a diagrammatic sectional view of a portion of a gas turbine engine.

### DETAILED DESCRIPTION

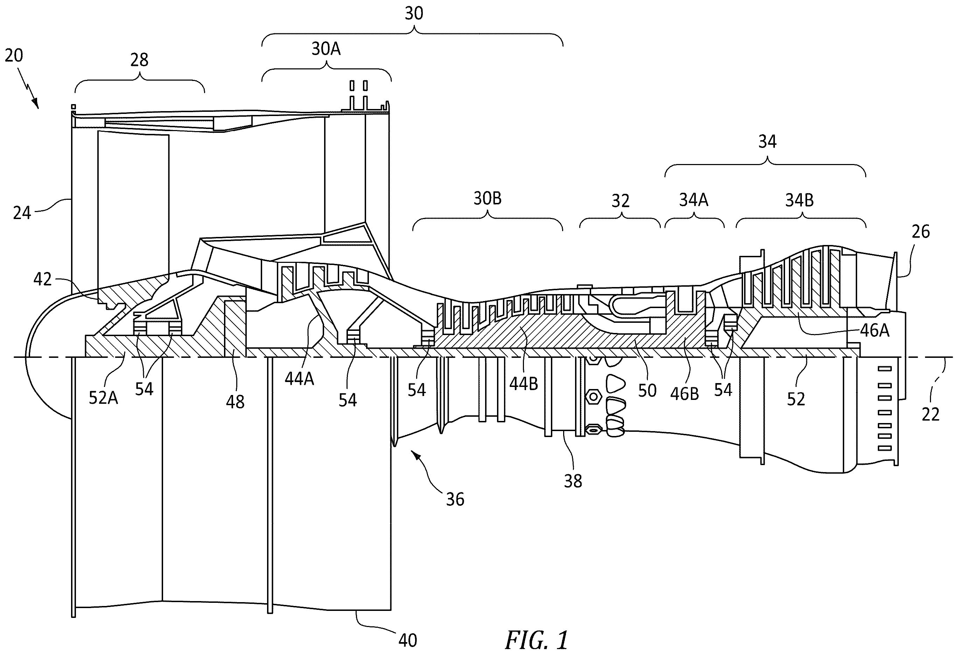

FIG. 1 is a side cutaway illustration of a geared gas turbine engine 20 such as those used in aircraft (e.g., an aircraft engine). This turbine engine 20 extends along or generally parallel to a central axis 22 between an upstream airflow inlet 24 and a downstream airflow exhaust 26. The turbine engine 20 includes a fan section 28, a compressor section 30, a combustor section 32 and a turbine section 34. The compressor section 30 includes a low pressure compressor (LPC) section 30A and a high pressure compressor (HPC) section 30B. The turbine section 34 includes a high pressure turbine (HPT) section 34A and a low pressure turbine (LPT) section 34B. The diagrammatic representation of a gas turbine engine 20 shown in FIG. 1 is provided herewith to illustrate the various sections within a gas turbine engine 20. The present disclosure is not limited to the engine configuration shown in FIG. 1.

The engine sections 28-34B are arranged sequentially along the central axis 22 within an engine housing 36. This engine housing 36 includes an inner case 38 (e.g., a core case) and an outer case 40 (e.g., a fan case). The inner case 38 may house one or more of the engine sections 28-34B; e.g., a core of the turbine engine 20. The outer case 40 may house at least the fan section 28.

Each of the engine sections 28, 30A, 30B, 34A, 34B includes a respective bladed rotor 42, 44, and 46. Each of these bladed rotors 42, 44, 46 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 42 is connected to a geartrain 48, for example, through a fan shaft 52A. The geartrain 48 and the LPC rotor 44A are connected to and driven by the LPT rotor 46A through a first rotating shaft 52 (e.g., a low speed shaft). The HPC rotor 44B is connected to and driven by the HPT rotor 46B through a second rotating shaft 50 (e.g., a high speed shaft). The shafts 50, 52, 52A are rotatably supported by a plurality of bearings 54; e.g., rolling element and/or thrust bearings. Each of these bearings 54 is connected to the engine housing 36 by at least one stationary structure such as, for example, an annular support strut.

The gas turbine engine 20 (e.g., for an aircraft) shown in FIG. 1 is provided to facilitate the description of the present disclosure. The present disclosure is not limited to any particular gas turbine engine configuration other than as is described herein. The terms "forward", "leading", "aft, "trailing" are used herein to indicate the relative position of a fluid, component or surface. In an engine 20 like that shown in FIG. 1, the fan section 28 is "forward" of the compressor section 30 and the turbine section 34 is "aft" of the compressor section 30. The terms "upstream" and "downstream" used herein refer to the direction of a fluid flowing through the engine 20. The terms "radial" and "circumferential" are used herein with respect to the central axis 22 of the turbine engine 20.

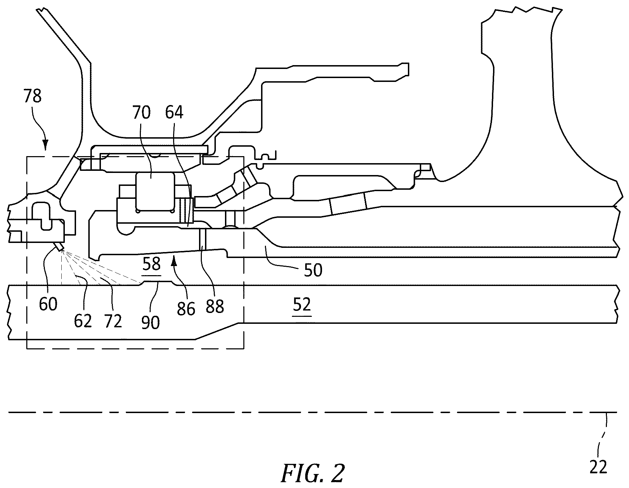

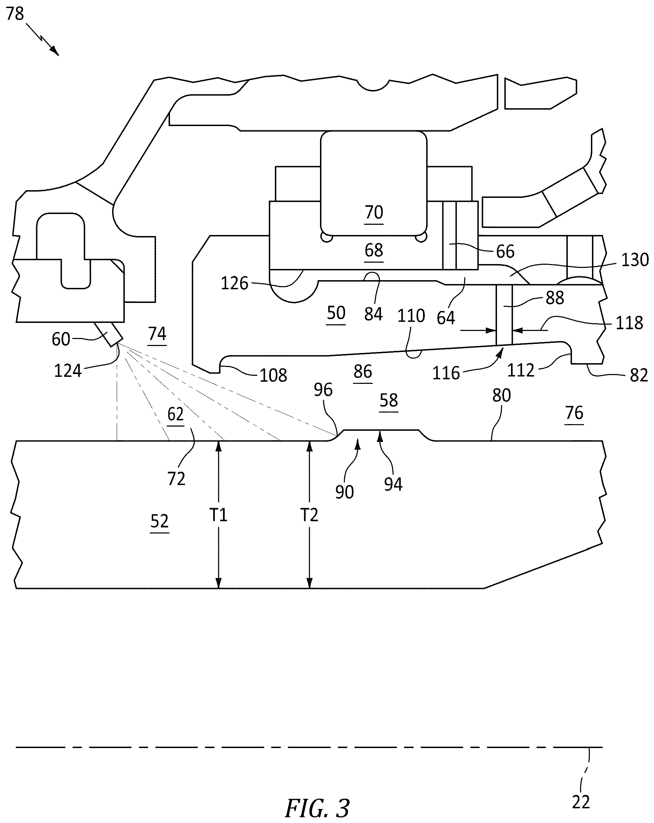

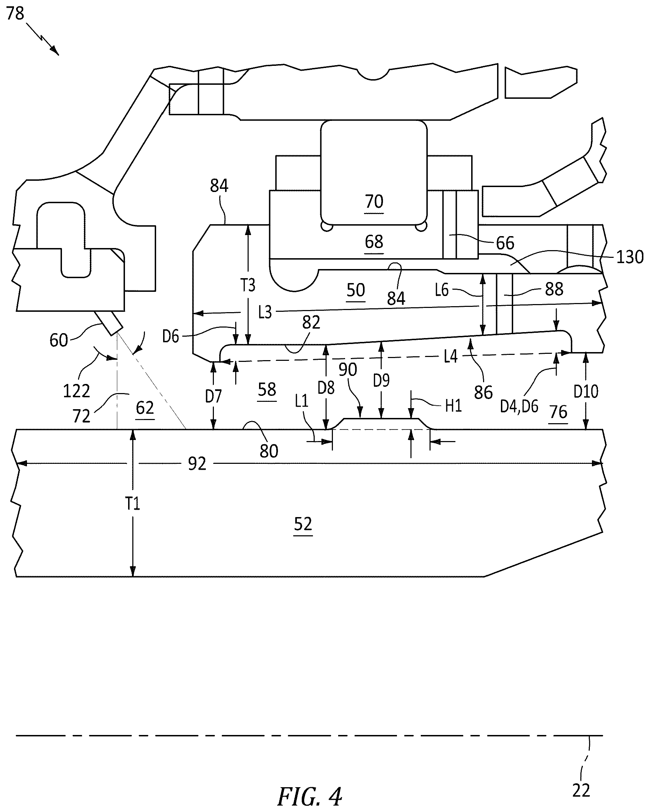

FIG. 2 is a diagrammatic illustration of a portion of the compressor section 30, and in greater particularity, a first rotating shaft 52, a second rotating shaft 50, and a bearing 70. While a portion of the compressor section 30 is shown, it is for exemplary purposes only and is otherwise nonlimiting. Between the second rotating shaft 50 and the first rotating shaft 52 is a flowpath 58. Also shown on FIG. 2 is a nozzle 60 with a spray path 62. Between the second rotating shaft 50 and the bearing 70 is a second flowpath 64. The bearing 70 includes at least one inlet 66 within the inner race 68 (see, e.g., FIG. 3). Fluid 72 such as a lubricant (e.g., oil) (see e.g., FIG. 4) flows throughout/around the components described in exemplary FIG. 2, and will be discussed in greater detail below. As shown in FIG. 3, the first end (e.g., upstream end) 74 of the second rotating shaft 50 and the first rotating shaft 52 are shown, and the second end (e.g., downstream end) 76 of the second rotating shaft 50 and the first rotating shaft 52 are generally opposite to its respective first end (e.g., upstream end) 74.

As shown in FIG. 3, according to an embodiment of the present disclosure, a lubricant system 78 includes the first rotating shaft 52 having a first outer surface 80, the second rotating shaft 50 having a second inner surface 82 and a second outer surface 84, a flowpath 58 between the first outer surface 80 and the second inner surface 82, and a fluid (e.g., a lubricant such as oil) 72 within the flowpath 58. The second inner surface 82 includes a recess 86. The fluid (e.g., a lubricant such as oil) 72 is directed towards the first outer surface 80. The fluid (e.g., a lubricant such as oil) 72 is thereafter directed to the recess 86. The recess 86 collects the fluid (e.g., a lubricant such as oil) 72. The fluid (e.g., a lubricant such as oil) 72 flows through an outlet 88 through the second rotating shaft 50 and radially outward (e.g., in a first radial direction) of the second outer surface 84. The first rotating shaft 52 may include a protrusion 90 extending radially outward of the first outer surface 80. The first rotating shaft 52 may include a depression 100 upstream of the protrusion 90 and extending radially inward (e.g., in a second radial direction) of the first outer surface 80. The second rotating shaft 50 may include a ledge 114 upstream of the recess, and may also include a retaining wall 120 downstream of the recess 86.

The lubricant system 78 may also include at least one nozzle 60 directing the fluid 72 through a spray path 62 within the flowpath 64 and towards the first rotating shaft 52. The lubricant system 78 may also include a second flowpath radially outward of the second outer surface 84 and in fluid communication with the outlet 88. The second flowpath 64 may further direct fluid 72 towards one or more inlets 66 in the bearing 70 and/or through its at least one race 68 in order to transmit fluid 72 to the components of the bearings 70. These and other features of the present disclosure will be discussed in greater detail below.

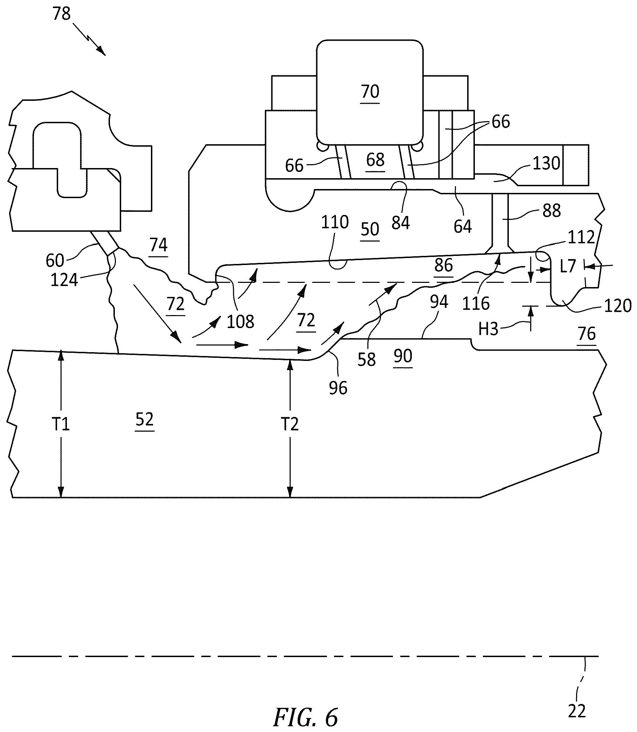

Referring now to FIGS. 2-6, the first rotating shaft 52 includes the first outer surface 80. The first outer surface 80 includes a first rotating shaft length 92 running from a first end (e.g., an upstream end) 74 to a second end (e.g., a downstream end) 76.

The first rotating shaft 52 (e.g., a low speed shaft) rotates about the central axis 22. The first rotating shaft 52 may rotate clockwise or counterclockwise. The first rotating shaft 52 has a first angular velocity.

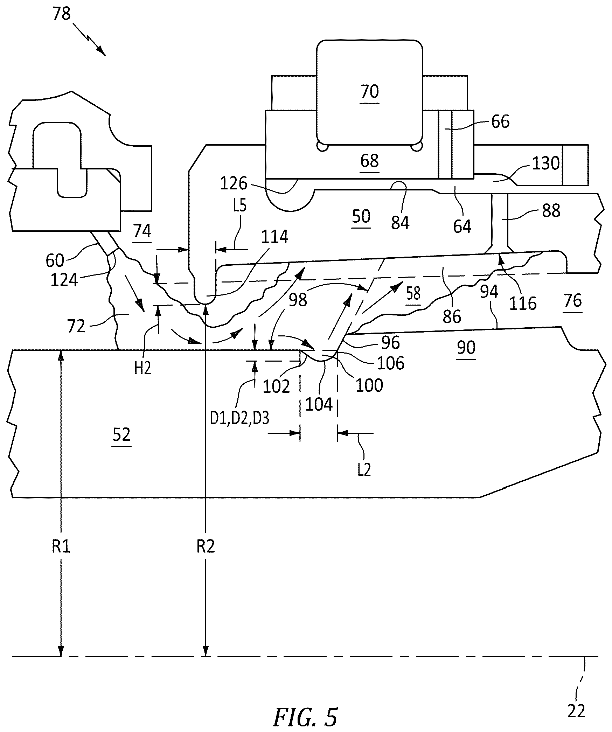

In some embodiments, along the first outer surface 80 of the first rotating shaft 52 and between the first end (e.g., upstream end) 74 and the second end (e.g., downstream end) 76 is a protrusion 90. The protrusion 90 extends radially outward along the central axis 22 from the first outer surface 80. The protrusion 90 thus has a height H1 beyond the first outer surface 80 and into the flowpath 58. The protrusion 90 has a protrusion length L1 extending from first end (e.g., an upstream end) 74 towards a second end (e.g., downstream end) 76. The protrusion 90 may include a plateau 94. The plateau 94 may include a generally planar surface in sectional view such as those shown in FIGS. 3-4, or may include a sloped or tapered surface in sectional view such as those shown in FIG. 5. Instead of a plateau 94, the protrusion 90 may be stepped. The protrusion 90 has a first wall 96 that may be sloped. The first wall 96 may include a linear slope. The first wall 96 may be generally planar, curved, stepped, combinations thereof, etc. A fillet and/or a chamfer may be included between the first outer surface 80 and the first wall 96.

The protrusion 90 extends generally radially around the first rotating shaft 52 (e.g., about and/or on the first outer surface 80). The protrusion may include a generally constant geometric structure in the radial direction around the first rotating shaft 52 (e.g., about and/or on the first outer surface 80). The protrusion 90 is a continuous structure about a radial portion of the first rotating shaft 52 (e.g., about and/or on the first outer structure 80), such that the protrusion 90 extends radially around the perimeter of the first rotating shaft 52 defined by the first outer surface 80.

In profile, the protrusion 90 has a polygonal and/or arcuate structure that is revolved about the first outer surface 80 along the central axis 22. For instance and for illustrative purposes only, the protrusion 90, in isolation and only as a construct (e.g., without the first rotating shaft 52) is a cylindrical-type shape with a cross-sectional shape that is, for instance, rectangular, square, trapezoidal, triangular, a frustum, prismatic, arcuate, combinations thereof, etc..

A protrusion angle 98 is defined between the first outer surface 80 and the first wall 96. The protrusion angle 98 may be any angle that functions to direct the fluid 72 from the first wall 96 towards the recess 86.

The protrusion 90 may be slight or small in size with respect to the size (e.g., length 92, thickness, etc.) of the first rotating shaft 52. The protrusion 90 is configured to have sufficient structural integrity to withstand environmental conditions and stresses. Similarly, the protrusion 90 is configured to ensure that by way of the protrusion's 90 attachment to the first rotating shaft 52, the first rotating shaft 52 also has sufficient structural integrity to withstand environmental conditions and stresses.

In some embodiments, the first rotating shaft 52 is tapered, such that the first rotating shaft 52 has a first thickness T1 that is different than a second thickness T2 of the first rotating shaft 52. The first thickness T1 is upstream of the second thickness T2. In some embodiments, the first thickness T1 is greater than the second thickness T2. In some embodiments, the first thickness T1 is less than the second thickness T2. In embodiments where the structure is not tapered, the first thickness T1 is generally equal to the second thickness T2, albeit subject to manufacturing tolerances.

In some embodiments, the first rotating shaft 52 includes a depression 100. In some embodiments, along the first outer surface and between the upstream end (e.g., first end) 74 and the second end (e.g., downstream end) 76 is the depression 100. The depression 100 has a depression length L2 extending between and from an upstream end 74 towards a second end (e.g., downstream end) 76. The depression 100 extends radially inward from the first outer surface 80. The depression 100 thus has a depth radially inward of the first outer surface 80, including a depression maximum depth D1.

The depression 100 extends generally radially within the first rotating shaft 52 (e.g., inwardly of the first outer surface 80). The depression 100 may include a generally constant geometric structure in the radial direction within the first rotating shaft 52 (e.g., inwardly of the first outer surface 80). The protrusion 90 is a continuous structure within a radial portion of the first rotating shaft 52 (e.g., radially inwardly of the first outer surface 80), such that the depression 100 extends radially within the perimeter of the first rotating shaft 52 defined by the first outer surface 80.

In profile, the depression 100 has a polygonal and/or arcuate structure that is revolved within the first outer surface 80 along the central axis 22. For instance and for illustrative purposes only, the depression 100, in isolation and only as a construct (e.g., without the first rotating shaft) may include cylindrical-type shape with a cross-sectional shape that is, for instance, rectangular, square, trapezoidal, triangular, a frustum, prismatic, arcuate, combinations thereof, etc.. In other embodiments, and for illustrative purposes only, the depression 100, in isolation and only as a construct (e.g., without the first rotating shaft 52) may include a cross-sectional shape that is semi-circular, semi-elliptical, parabolic, hyperbolic, tear-drop, semi-ovular, semi-ovoid, arcuate, etc.

The depression 100 has a first tapered portion 102 that includes a first depression slope. The first tapered portion 102 may include a linear slope. The first tapered portion 102 may be generally planar, curved, stepped, combinations thereof, etc. The first tapered portion 102 has a first depression depth D2. A roundel and/or a chamfer may be included between the first outer surface 80 and the first tapered portion 102.

The depression 100 may include a floor 104. The floor 104 may be generally planar or may have a varied topography. A fillet and/or a chamfer may be included between the first tapered portion 102 and the floor 104.

The depression 100 has a second tapered portion 106. The second tapered portion 106 has a second depression slope. The second tapered portion 106 may be generally planar, curved, stepped, combinations thereof, etc. The second tapered portion 106 has a second depression depth D3. A fillet and/or a chamfer may be included between the floor 104 (or the first tapered portion 102) and the second tapered portion 106. A fillet and/or a chamfer may be included between the second tapered portion 106 and the first outer surface 80 and/or the protrusion 90.

The first tapered portion 102 is upstream of the second tapered portion 106. The depression 100 has a depression maximum depth that may or may not be equal to either or both of the first depression depth D2 and the second depression depth D3. The first depression slope may be greater than, equal to, or less than the second depression slope. The depression maximum depth D1 may be greater than or equal to the first depression depth D2 and/or the second depression depth D3. The each of the first depression depth D2, the second depression depth D3 and the depression maximum depth D1 is the distance is within the depression 100 (e.g., from the floor 104 or where the first tapered portion 102 meets the floor 104, or where the second tapered portion 106 meets the floor 104) to the projection of the first outer surface 80.

The depression 100 may be slight or small in size with respect to the size (e.g., length L2, depth D1, D2, D3, etc.) of the first rotating shaft 52. The depression 100 is configured to have sufficient structural integrity to withstand environmental conditions and stresses.

In some embodiments having a depression, the depression 100 is upstream of the protrusion 90. The depression 100 is proximal, adjacent to, and or attached to the protrusion 90. The depression 100 and the protrusion 90 form an inner fluid surface in concert with the first outer surface 80 (e.g., that is upstream of either or both of the depression 100 and the protrusion 90).

Referring still to FIGS. 2-6, the second rotating shaft 50 includes the second inner surface 82, a second outer surface 84, and a second thickness T3 defined between the second inner surface 82 and the second outer surface 84. The second rotating shaft 50 includes a length L3 running from a first end (e.g., an upstream end) 74 to a second end (e.g., a downstream end) 76.

The second rotating shaft 50 is configured to rotate about the central axis 22. The second rotating shaft 50 may rotate clockwise or counterclockwise. The second rotating shaft 50 may co-rotate or counter-rotate with respect to the first rotating shaft 52. The second rotating shaft 50 has a second angular velocity. The second angular velocity may be the same as or different than the first angular velocity. In embodiments where the second rotating shaft 50 is a high speed shaft and the first rotating shaft 52 is a low speed shaft, the first angular velocity [of the first rotating shaft 52] is less than the second angular velocity [of the second rotating shaft 50]. The second rotating shaft 50 may be coaxial with the first rotating shaft 52. The second rotating shaft 50 has a second radius R2 (and also second diameter) that may be greater than the first radius R1 (and also first diameter) of the first rotating shaft 52.

In some embodiments, the second shaft 50 includes a recess 86. In some embodiments, along the second inner surface 82 and between the first end 74 and the second end 76 is a recess 86. The recess 86 has a recess length L4 extending from and between a first end (e.g., upstream end) 74 towards a second end (e.g., downstream end) 76. The recess 86 extends radially outward of the central axis 22 and thus extends outward from the second inner surface 82 and inward into the thickness T3 of the second rotating shaft 50. The recess 86 thus has a depth radially outward of the second inner surface 82 and inward into the thickness T3 of the second rotating shaft 50, including a recess maximum depth D4.

The recess 86 extends generally radially within the second rotating shaft 50 (e.g., outwardly of the second inner surface 82 and towards the second outer surface 84). The recess 86 may include a generally constant geometric structure in the radial direction within the second rotating shaft 50 (e.g., outward of the second inner surface 82 and towards the second outer surface 84). The recess 86 is a continuous structure within a radial portion of the second rotating shaft 50 (e.g., outwardly of the second inner surface 82 and towards the second outer surface 84), such that the recess 86 extends radially within the perimeter of the second rotating shaft 50 defined by the second inner surface 82.

In profile, the recess 86 has a polygonal and/or arcuate structure that is revolved within the second inner surface 82 along the central axis 22. For instance and for illustrative purposes only, the recess 86, in isolation and only as a construct (e.g., without the second rotating shaft 50) may include cylindrical-type shape with a cross-sectional shape that is, for instance, rectangular, square, trapezoidal, triangular, a frustum, prismatic, arcuate, combinations thereof, etc.. In other embodiments, and for illustrative purposes only, the recess 86, in isolation and only as a construct (e.g., without the second rotating shaft 50) may include a cross-sectional shape that is rectangular, square, trapezoidal, triangular, a frustum, prismatic, semi-circular, semi-elliptical, parabolic, hyperbolic, tear-drop, semi-ovular, semi-ovoid, arcuate, etc.

The recess 86 has a first wall portion 108 that includes a first wall slope. The first wall portion 108 may include a linear slope. The first wall portion 108 may be generally planar, curved, stepped, combinations thereof, etc. The first wall portion 108 has a first recess depth R5. A roundel and/or a chamfer may be included between the second inner surface 82 and the first wall portion 108.

The recess 86 may include a basin 110. The basin 110 may be generally planar or may have a varied topography. A fillet and/or a chamfer may be included between the first wall portion 108 and the basin 110.

The recess 86 has a second wall portion 112. The second wall portion 112 has a second recess slope. The second wall portion 112 may include a linear slope. The second wall portion 112 may be generally planar, curved, stepped, combinations thereof, etc. The second wall portion 112 has a second recess depth R6. A fillet and/or a chamfer may be included between the basin 110 (or the first wall portion 108) and the second wall portion 112. A fillet and/or a chamfer may be included between the second wall portion 112 and the second inner surface 82.

The first wall portion 108 is upstream of the second wall portion 112. The recess 86 has a recess maximum depth D4 that may or may not be equal to either or both of the first recess depth D5 and the second recess depth D6. The first recess slope may be greater than, equal to, or less than the second recess slope. The recess maximum depth D4 may be greater than or equal to the first recess depth D5 and/or the second recess depth D6. The each of the first recess depth D5, the second recess depth D6 and the recess maximum depth D4 is the distance is within the recess 86 (e.g., from the basin 110 or where the first wall portion 108 meets the basin 110, or where the second wall portion 112 meets the basin 110) to the projection of the second inner surface 82.

The recess 86 may be slight or small in size with respect to the size (e.g., length L3, thickness T3, etc.) of the second rotating shaft 50. The recess 86 is configured to have sufficient structural integrity to withstand environmental conditions and stresses.

In some embodiments, the second rotating shaft 50 includes a ledge 114. The ledge 114 extends outwardly (e.g., radially inward) of the second inner surface 82. In some embodiments, the ledge 114 is proximal to the first end (e.g., upstream end) 74 of the second rotating shaft 50. In some embodiments, the ledge 114 is at the first end (e.g., upstream end) 74 of the second rotating shaft 50.

The ledge 114 has a ledge length L5 and the ledge height H2 configured to ensure the ledge 114 has sufficient structural integrity to withstand environmental conditions and stresses. The ledge 114 having the ledge length L5 and the ledge height H2 is so configured to ensure that by way of the ledge's 114s attachment to the second rotating shaft 50, the second rotating shaft 50 also has sufficient structural integrity to withstand environmental conditions and stresses.

The ledge 114 is upstream of the recess. In some embodiments, the ledge 114 is adjacent to, attached to, or integral with the first wall portion 108. In some embodiments, the ledge 114 has a roundel and/or a chamfer where it joins the second inner surface 82 and/or the first wall portion 108.

The second rotating shaft 50 includes an outlet 88. The outlet 88 extends through the thickness T3 of the second rotating shaft 50, between the second inner surface 82 and the second outer surface 84. More particularly, the outlet 88 is proximal to the recess 86. In some embodiments, the outlet 88 is within the basin 110 of the recess 86. Said differently, the mouth 116 of the outlet 88 is located in the basin 110 of the recess 86. Where the basin 110 and the mouth 116 of outlet 88 join, a chamfer or a roundel and/or a chamfer may be provided. The outlet 88 is between the first wall portion 108 and the second wall portion 112. The outlet 88 is fluidly coupled to the flowpath 58 as will be discussed in greater detail below.

The outlet 88 has an inner dimension 118 (e.g., a diameter, radius, circumference, perimeter, etc.) suitable for receiving fluid 72 and transporting the fluid 72 from the second inner surface 82 (e.g., via the recess 86, and through the basin 110 thereof, etc.) to the second outer surface 84. The outlet 88 may include a constant inner dimension 118 or a variable inner dimension 118 (e.g., a throttling-type or nozzle-type inner dimension 118) along its length L6 between the second inner surface 82 and the second outer surface 84.

In some embodiments, the second rotating shaft 50 includes a retaining wall 120. The retaining wall 120 extends outwardly (e.g., radially inward) of the second inner surface 82. In some embodiments, the retaining wall 120 is distal to the first end (e.g., upstream end) 74 of the second rotating shaft 50.

The retaining wall 120 has a retaining wall length L7 and the retaining wall height H3 configured to ensure the retaining wall 120 has sufficient structural integrity to withstand environmental conditions and stresses. The retaining wall 120 having the retaining wall length L7 and the retaining wall height H3 is so configured to ensure that by way of the retaining wall's attachment to the second rotating shaft 50, the second rotating shaft 50 also has sufficient structural integrity to withstand environmental conditions and stresses.

The retaining wall 120 is downstream of the recess 86. In some embodiments, the retaining wall 120 is adjacent to, attached to, or integral with the second wall portion 112. In some embodiments, the retaining wall 120 has a roundel and/or a chamfer where it joins the second inner surface 82 and/or the second wall portion 112.

Between the first rotating shaft 52 and the second rotating shaft 50 is a flowpath 58. The flowpath 58 extends radially outward of the first outer surface 80. The flowpath 58 extends radially inward of the second inner surface 82. The flowpath 58 extends between the recess 86, the ledge 114, the retaining wall 120, the depression 100, and the protrusion 90. The flowpath 58 has a first flowpath diameter D7 proximal the first end (e.g., upstream end) 74 of the first rotating shaft 52 and/or the second rotating shaft 50. The flowpath 58 has a second flowpath diameter D8 between the recess 86 and the first outer surface 80. The flowpath 58 has a third flowpath diameter D9 between the recess 86 and the protrusion 90. The flowpath 58 has a fourth flowpath diameter D10 between the first outer surface 80 and the second inner surface 82 downstream of the recess 86. The first flowpath diameter D7 is less than the second flowpath diameter D8. The second flowpath diameter D8 is greater than the third flowpath diameter D9. The fourth flowpath diameter D10 is less than the second flowpath diameter D8. In some embodiments, the first flowpath diameter D7 is generally equal to the fourth flowpath diameter D10. The flowpath 58 is suitable for a fluid, such as a lubricant and/or coolant (e.g., oil) 72. The flowpath 58 is in fluid communication with the outlet 88 (e.g., the mouth 116 of the outlet 88).

As shown in exemplary FIGS. 2-6, one or more nozzles 60 is configured to provide a stream of fluid (e.g., lubricant and/or a coolant, such as oil) 72 into the flowpath 58. The fluid may be pressurized by way of ejection from a respective nozzle 60. The one or more nozzles 60 are configured to direct the stream of fluid (e.g., lubricant and/or a coolant, such as oil) 72 in a spray path 62 towards the first rotating shaft 52 (e.g., the first outer surface 80). The nozzle 60 may be configured to have a stream angle 122 defined between an orthogonal projection from the first outer surface 80 at the first end (e.g., upstream end) 74 of the first rotating shaft 52 and the nozzle tip 124. The stream angle 122 is between 0 degrees and 90 degrees, or between about 0 degrees and 75 degrees, or between about 0 degrees and about 60 degrees, or about 20 degrees, about 30 degrees, about 40 degrees, about 45 degrees, about 60 degrees, or about 75 degrees.

Referring again to FIGS. 2-6, bearing 70 is provided and includes an inner race 68 having an outer surface 126 including at least one inlet 66 extending between the outer surface 126 inwardly towards at least one bearing 70. Between the bearing 70 and the second rotating shaft 50 is a second flowpath 64. The second flowpath 64 may include a well 130 proximal to the outlet 88 of the second rotating shaft 50. The well 130 is configured to receive and retain fluid (e.g., lubricant, such as oil) 72 for transmitting throughout the second flowpath 64 and into the bearing 70. As shown in FIGS. 2-6, additional bearings 70 may be included

The fluid 72 from the nozzle 60 collides against (e.g., hits, impacts, etc.) the first rotating shaft 52 (e.g., the first outer surface 80). The fluid 72 may immediately move from the first rotating shaft 52 (e.g., the first outer surface 80) into the flowpath 58 and thereafter collide (e.g., hit, impact) the second rotating shaft 50 (e.g., the second inner surface 82). Depending on environmental conditions, including flowrate, ambient pressure, rotational speed of the first rotating shaft 52 and second rotating shaft 50, some fluid 72 may immediately move from (e.g., detach from, disengage from, be redirected from, etc.) the first outer surface 80 while some fluid 72 may travel downstream along the first outer surface 80. Thereafter, some of the fluid 72 that did not immediately move from (e.g., detach from, disengage from, be redirected from, etc.) the first outer surface 80 will thereafter move from (e.g., detach from, disengage from, be redirected from, etc.) the first outer surface 80. Yet still, certain amounts of the fluid 72 may still remain adjacent to (e.g., along, attached to, etc.) the first outer surface 80. While forces (e.g., friction, etc.) and/or material properties (e.g., viscosity, etc.) may cause the fluid 72 to remain adjacent to the first rotating shaft 52, centrifugal forces may, at least partially, cause at least some of the fluid 72 to be directed off the first outer surface 80 into the flowpath 58 and towards the second rotating shaft 50 (e.g., the second inner surface 82). Yet still, centrifugal forces may not be great enough to cause the fluid 72 to separate from the first outer surface 80. As the fluid 72 travels downstream along the first outer surface 80, the fluid 72 approaches the protrusion 90, the protrusion 90 directs the fluid 72 towards the second rotating shaft 50. The protrusion 90 is configured as a ramp to promote the fluid 72 to move (e.g., detach, disengage, redirect, etc.) from the first outer surface 80, into the flowpath 58, and towards the second rotating shaft 50 (e.g., the second inner surface 82).

The fluid 72 detaches from the first outer surface 80 (e.g., such as from the protrusion 90) into the recess 86. The fluid 72 entering the flowpath 58 directly or indirectly flows into the recess 86. Just as the fluid 72 may travel downstream along the first rotating shaft 52 (e.g., the first outer surface 80), the fluid 72 may also travel downstream within the flowpath 58 and/or along the second rotating shaft 50 (e.g., the second inner surface 82).

In some embodiments, the fluid 72 that does not detach from the first outer surface 80 on its own continues downstream towards the depression 100. The depression 100 collects the fluid 72 and/or causes fluid 72 to more readily approach the protrusion 90, thereafter detaching from the protrusion 90 and into the flowpath 58.

The first wall portion 108 is upstream of the protrusion 90. The protrusion 90 is upstream of the second wall portion 112. The first wall portion 108 is upstream of the depression 100. The depression 100 is upstream of the second wall portion 112.

In some embodiments, the recess length L4 is greater than the protrusion length L1. In some embodiments, the recess length L4 is greater than the depression length L2 [of the depression]. In some embodiments, the recess length L4 is greater than the sum of the depression length L2 and the protrusion length L1.

In some embodiments, the protrusion 90 and the recess 86 are radially aligned about the central axis 22. In some of these embodiments, the protrusion length L1 is radially aligned with the recess length L4 such that the entire protrusion length L1 is aligned with the recess length L4. Said differently, the first end (e.g., upstream end) 74 of the protrusion 90 is downstream of the first wall portion 108, and the second end (e.g., downstream end) 76 of the protrusion 90 is upstream of the second wall portion 112.

In some embodiments, the protrusion 90 and the recess 86 are at least partially radially aligned about the central axis 22. In some embodiments, the first end (e.g., upstream end) 74 of the protrusion 90 is downstream of the first wall portion 108, and the second end (e.g., downstream end) 76 of the protrusion 90 is downstream of the second wall portion 112.

In some embodiments, a ratio of the recess length L4 to the protrusion length L1 is between about 1:1 to about 10:1, or between about 2:1 and about 5:1. In some embodiments, the ratio of the recess length L4 to the sum of the protrusion length L1 and depression length L2 is between about 1:1 to about 9:1, or between about 2:1 to about 4:1.

The protrusion 90 is integral with the first rotating shaft 52. The protrusion 90 may be welded to, brazed onto, formed monolithically with the first rotating shaft 52.

In a further aspect of the present disclosure, which the Applicant expressly reserves the right to claim independently, a method for flowing fluid (e.g., lubricant such as oil) 72 between structures 50, 52 is provided. A nozzle 60 ejects a fluid 72 (e.g., fluid, such as a lubricant) downstream towards the first outer surface 80 of the first rotating shaft 52. The fluid 72 enters the flowpath 58 by detaching from the first outer surface 80 of the first rotating shaft 52. The fluid 72 detaches from the first outer surface 80 after colliding with the first outer surface 80. The fluid 72 travels downstream through the flowpath 58 towards the second inner surface 82 of the second rotating shaft 50. The fluid 72 enters the recess 86 by way of the first wall portion 108. The fluid 72 travels within the recess 86 and downstream along the basin 110 towards the mouth 116 of the outlet 88. The fluid 72 is retained within the basin 110 by the second wall portion 112. The fluid 72 travels into the mouth 116 of the outlet 88, radially outward through the outlet 88, and outward of the second outer surface 84 and inward of the race outer surface 126 into a second flowpath 64 (e.g., the well 130) for the one or more bearings 70. The fluid 72 thereafter travels radially outward through the one or more inlets 66 in the race 68 and towards the one or more bearings 54.

In a further aspect of the present disclosure, a method for flowing fluid (e.g., lubricant such as oil) 72 between structures 50, 52 is provided. A nozzle 60 ejects a fluid (e.g., lubricant such as oil) downstream towards the first outer surface 80 of the first rotating shaft 52. The fluid 72 enters the flowpath 58 by detaching from the first outer surface 80 of the first rotating shaft 52. The fluid 72 detaches from the first outer surface 80 after colliding with the first outer surface 80. The fluid 72 travels downstream along the first outer surface 80 and onto the protrusion 90. Upon engaging the protrusion 90, the fluid 72 detaches from the protrusion 90 into the flowpath 58. From the flowpath 58, the fluid 72 enters into the recess 86. The fluid 72 is retained within the recess 86 (e.g., within the basin 110 and between the first wall portion 108 and the second wall portion 112) and travels downstream along the basin 110 towards the mouth 116 of the outlet 88. The fluid 72 is retained within the basin 110 by the second wall portion 112. The fluid 72 travels into the mouth 116 of the outlet 88, radially outward through the outlet 88, and outward of the second outer surface 84 and inward of the race outer surface 126 into a second flowpath 64 (e.g., the well 130) for the one or more bearings 70. The fluid 72 thereafter travels radially outward through the one or more inlets 66 in the race 68 and towards the one or more bearings 54.

In some embodiments, the first rotating shaft 52 has a slight taper configured to direct fluid 72 downstream towards the protrusion 90. Once engaged with the protrusion 90, fluid flows radially outward of the protrusion 90 into the flowpath 58 and towards the recess 86.

In some embodiments, the first rotating shaft 52 includes a depression 100, whereby the fluid 72 flows into the depression 100. The depression 100 is proximal to the protrusion 90 such that the fluid 72 received within the depression 100 travels downstream to the protrusion 90 where it thereafter travels radially outward into the flowpath 58.

In some embodiments, the second rotating shaft 50 includes a ledge 114 at or proximal to the first end (e.g., upstream end) 74 of the second rotating shaft 50. The ledge 114 extends outwardly from and radially inward of the second inner surface 82. The ledge 114 is configured to contain and direct fluid 72 from the flowpath 58 into the recess 86.

In some embodiments, the second rotating shaft 50 includes a retaining wall 120 downstream of the recess 86. The retaining wall 120 extends outwardly from and radially inward of the second inner surface 82. The retaining wall 120 is configured to contain fluid 72 from the flowpath into the recess 86. The retaining wall 120 is configured to mitigate against fluid travelling outward of or downstream to the recess 86 and into the flowpath 58.

The components of the present disclosure (e.g., the first rotating shaft 52, second rotating shaft 50, the one or more bearings 70 etc.) are made of materials such as metal (e.g., steel, aluminum alloys, magnesium alloys, titanium alloys, super alloys, nickel alloys, etc..).

As described above, the fluid 72 is a lubricant and/or a coolant. The fluid 72 is, for example, oil, blended oils, or other known fluids that afford lubrication and/or can transfer heat from structures. Such fluids 72 can be natural, synthetic, blends thereof, etc..

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

The terms "substantially", "generally" and/or "about" as contemplated herein are used with the appreciation that small variations in dimensions are within the present disclosure. Such small variations can include variations due to manufacturing tolerances and/or expansion/contraction and or wear of parts subjected to varying conditions (e.g., pressure, force, temperature, etc.) up to and including a 10% variance of the nominal dimension.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A lubrication system (78) for a gas turbine engine (20), comprising:
a first rotating shaft (52) having a first outer surface (80), the first rotating shaft (52) configured to rotate about a central axis (22);
a second rotating shaft (50) having a second inner surface (82) and a second outer surface (84), the second rotating shaft (50) disposed radially outward of the first rotating shaft (52), the second rotating shaft (50) configured to rotate about the central axis (22), the second inner surface (82) including a recess (86);
a flowpath (58) between the first outer surface (80) and the second inner surface (82); and
a lubricant (72) directed into the flowpath (58), the lubricant (72) in contact with the first outer surface (80),
wherein the lubricant (72) separates from the first outer surface (80) through the flowpath (58) and into the recess (86).

2. The lubrication system according to claim 1, wherein the first outer surface (80) includes a protrusion (90), the protrusion (90) spaced from the second inner surface (82) by the flowpath (58), the protrusion (90) positioned radially along the first outer surface (80) between a first end of the recess (86) and a second end of the recess (86).

3. The lubrication system according to claim 2, wherein the recess (86) includes an outlet (88) proximal to the second end of the recess (86).

4. The lubrication system according to claim 3, wherein the protrusion (90) includes a plateau (94), the plateau (94) extending along the first outer surface (80) and is radially proximal to the outlet (88) on the second inner surface (82).

5. The lubrication system according to any of claims 2 to 4, wherein the first outer surface (80) includes a depression (100) disposed upstream of the protrusion (90).

6. The lubrication system according to any of claims 2 to 5, further comprising a nozzle (60) disposed upstream of the protrusion (90).

7. The lubrication system according to any preceding claim, wherein the first rotating shaft (52) rotates in a first rotational direction, and the second rotating shaft (50) rotates in a second rotational direction opposite to the first rotational direction.

8. The lubrication system according to any of claims 1 to 6, wherein the first rotating shaft (52) and the second rotating shaft (50) rotate in a same rotational direction.

9. The lubrication system according to any preceding claim, wherein the first rotating shaft (52) rotates at a first angular velocity, and the second rotating shaft (50) rotates at a second angular velocity that is different than the first velocity.

10. The lubrication system according to any preceding claim, wherein the first rotating shaft (52) is a low speed shaft.

11. The lubrication system according to any preceding claim, wherein the second rotating shaft (50) is a high speed shaft.

12. The lubrication system according to claim 2 or any of claims 3 to 11 as dependent on claim 2, wherein the first outer surface (80) upstream of the protrusion (90) is tapered radially inwardly along the central axis (22) towards the protrusion (90).
